# EUROPÄISCHE PATENTSCHRIFT

(11) **EP 3 010 183 B1**
(45) Veröffentlichungstag und Bekanntmachung des Hinweises auf die Patenterteilung: **19.06.2019**
(21) Anmeldenummer: 14188644.0
(22) Anmeldetag: 13.10.2014
(51) Int. Cl.: H04L 12/28, H04L 29/12

(54) **Vorrichtung, System und Verfahren zum Verbinden von Feldbusgeräten mit dem Internet**
Device, system and method for connecting field bus devices with the internet
Dispositif, système et procédé de liaison d'appareils de bus de terrain avec Internet

(43) Veröffentlichungstag der Anmeldung: 20.04.2016
(73) Patentinhaber: Deutsche Telekom AG, 53113 Bonn (DE)
(72) Erfinder: Kraft, Andreas, 14129 Berlin (DE); Bitzer, Hans-Werner, 10717 Berlin (DE); Jenschar, Thomas, 13503 Berlin (DE); Manecke, Alexander, 12163 Berlin (DE); Sayegh, Andreas, 10437 Berlin (DE)
(74) Vertreter: Vossius & Partner Patentanwälte Rechtsanwälte mbB

(56) Entgegenhaltungen:
- EP-A1- 1 906 623
- EP-A1- 2 367 337
- EP-A2- 1 770 528
- WO-A1-2014/037779
- US-A1- 2013 091 279

## Beschreibung

### Technisches Gebiet

Die Erfindung betrifft eine Vorrichtung, ein System, einen Dienste-Server und ein Verfahren zum Verbinden von Feldbusgeräten mit dem Internet, insbesondere von Geräten, die an einen Feldbus anschließbar sind, der in einem lokalen Netzwerk angeordnet ist und über ein IPv6-2-x-Gateway mit dem Internet verbunden ist.

### Stand der Technik

In einem lokalen Netzwerk, wie in einem vernetzten Haus (Connect Home) können verschiedene Geräte, z.B. aus der Unterhaltungselektronik als auch Sensorik-Einrichtungen und Aktorik-Einrichtungen, z.B. Bewegungsmelder, Heizungsthermostate miteinander verbunden sein. Dabei sind heutzutage solche Geräte, insbesondere Geräte mit Sensorik oder Aktorik üblicherweise nicht über eine IP-Verbindung angeschlossen, sondern über einen sogenannten Feldbus angebunden (s. http://de.wikipedia.org/w/index.php?title=Feldbus&oldid=133675829). Feldbusse sind in der Regel nicht zu dem ISO/OSI-Schichtenmodell kompatibel. Bei diesen Feldbussen oder auch Bussystemen wie ZigBee oder ZWave handelt sich um spezielle, nicht-Internetprotokoll-basierte Bustechnologien, die für einen Einsatz in einem örtlich begrenzten Umfeld optimiert wurden, z.B. in der Wahl der Funkfrequenzbänder und im Energieverbrauch. Dementsprechend ist eine Identifikation bzw. Ansprache von Geräten, die an diesen Feldbussen angeschlossen sind, in der Regel nicht direkt aus einem IP-basierten Netzwerk möglich.

Um aus einem IP-Netzwerk heraus auf Geräte zuzugreifen, die an einen solchen Feldbus angeschlossen sind, benötigt man spezielle Komponenten. Diese implementieren auf der einen Seite mittels Hardware und Software den Zugriff auf den Feldbus, und auf der anderen Seite den Zugriff mittels IP-Technologien. Diese Komponenten nennt man Gateway (s. http://de.wikipedia.org/w/index.php?title=Gateway (Informatik)&oldid=131744869).

Im Allgemeinen implementiert ein solches Gateway den Zugriff auf die einzelnen am Feldbus angeschlossenen Geräte in der Art, dass es einen einzelnen IP-Protokollkanal für alle Geräte gibt. Diese werden z.B. mittels einer Nummer eindeutig identifiziert und diese dann individuell über eine Gateway-interne Verarbeitungskomponente im Feldbus angesteuert. Es geschieht also eine Umsetzung von n Geräten auf 1 IP-Verbindung zum Gateway. Das Gateway nimmt also eine beidseitige Abbildung von Geräten auf interne Identifikationsnummern vor.

In der Praxis ergeben sich bei der Implementierung der Gateways Probleme in der Daten- und Zugriffssicherheit. Angriffspunkte für Schadsoftware können sich aus der Manipulationen der Adressierung von Geräten ergeben. Ein Zugriff auf ein herkömmliches Gateway ermöglicht den Zugriff auch auf alle dahinter angeschlossenen Geräte. Herkömmliche Technik vertraut auf die üblichen Sicherheitsmaßnahmen im Heimnetz (z.B. eine Firewall im Heimrouter). Die Schwachstellen dieser Sicherheitsmaßnahmen können nicht erkannt werden, falls es zu Manipulationen gekommen ist. Es gibt auch keinen Sicherheitsmechanismus, der in einer anderen Weise der Manipulationsabwehr dient.

WO 2014/037779 A1 betrifft eine Internetworking-Lösung zwischen einem ZigBee-Netzwerk und einem IPv6-Netzwerk, um eine "end-to-end"-Kommunikation in dem Sensornetzwerk bereitzustellen.

EP 2 367 337 A1 betrifft ein Feldkommunikationssystem, das drahtlose Kommunikation mit den Feldgeräten durchführt.

EP 1 770 528 A2 bezieht sich allgemein auf industrielle Steuerungssysteme und insbesondere auf Systeme und Verfahren, die einen einheitlichen Adressierungsraum in einem Kommunikationsprotokoll schaffen, um Kommunikationen über Netzwerke mit einer einzigartigen Adressierungsmodus zu erlauben.

Der vorliegenden Erfindung liegt daher die Aufgabe zu Grunde, eine Vorrichtung, ein System und ein Verfahren bereitzustellen, mit dem Feldbusgeräte mit dem Internet verbunden werden können, wobei eine Identifikation bzw. Ansprache von Feldbusgeräten, die an diesen Feldbussen anschliessbar sind, möglich ist.

### Darstellung der Erfindung

Die Aufgabe wird erfindungsgemäß durch eine Vorrichtung nach Anspruch 1 sowie durch ein System nach Anspruch 6, und ein Verfahren nach Anspruch 9, wie in den unabhängigen Ansprüchen definiert, gelöst. Vorteilhafte Ausführungsvarianten der erfindungsgemäßen Vorrichtung, des Systems und des Verfahrens ergeben sich aus den abhängigen Ansprüchen.

Gemäß einem Aspekt der Erfindung weist eine Vorrichtung auf: a) mindestens einen Netzwerkadapter zum Anschluss an ein IPv6-Netzwerk, b) mindestens einen Feldbus-Netzwerkadapter zum Anschluss an einen zugehörigen Feldbus, und c) eine Adressen-Vergabeeinrichtung zum Konfigurieren mindestens eines virtuellen IPv6-Netzwerkadapters mit einer individuellen IPv6-Adresse für jeweils ein an dem Feldbus anschließbares Gerät.

Statt an ein IPv4-Netzwerk ist die Vorrichtung, insbesondere die Gateway-Vorrichtung an ein IPv6-Netzwerk angeschlossen. Für jedes am Feldbus anschließbare bzw. angeschlossene Gerät wird eine individuelle IPv6-Adresse vergeben. Es findet keine Umsetzung auf Identifikationsnummern o.ä. in Richtung des IPv6-Netzwerks statt. Die IPv6-Adresse reicht aus, um ein angeschlossenes Gerät eindeutig zu identifizieren.

Gemäß einem weiteren Aspekt der Erfindung ist die Adressen-Vergabeeinrichtung geeignet, einen IPv6 Interface Identifier, vorzugsweise als einen lokalen Teil einer individuellen IPv6-Adresse zu vergeben, der für das angeschlossene Gerät eindeutig ist und wobei die IPv6-Adresse einen IPv6- Prefix und den lokalen Teil der IPv6-Adresse aufweist. Dabei kann optional der IPv6- Prefix in bestimmten Zeitabständen, besonders bevorzugt nach jeweils einem Tag geändert werden, z.B. durch einen Netzwerkprovider eines Nutzers.

Ein angeschlossenes Gerät erhält vorzugsweise immer den gleichen IPv6 Interface Identifier, vorzugsweise den lokalen Teil einer IPv6-Adresse wie nachfolgend näher erläutert wird, auch wenn sich der IPv6-Prefix eines Heimnetzes ändert. So kann ein angeschlossenes Gerät am Gateway dauerhaft identifiziert werden.

Gemäß einem weiteren Aspekt der Erfindung weist die Adressen-Vergabeeinrichtung einen Protokollumsetzer auf, der geeignet ist zur Umsetzung mindestens eines Teils eines Feldbusprotokolls in eine IPv6-fähige Repräsentation, und umgekehrt, wobei die IPv6-Repräsentation eine textartige oder binäre Repräsentation darstellt.

Die vom Protokollumsetzer generierte textuelle oder binäre Repräsentation des Feldbusprotokolls kann per IPv6 übertragen werden (und umgekehrt). Das Format ist hierbei nicht festgelegt, sondern kann proprietär festgelegt sein oder einem Standard entsprechen. Beispiele für eine textartige Repräsentation sind XML, JSON, Windows-Ini, csv und Beispiele für eine binärartige Repräsentation sind ASN.1 oder proprietäre Formate.

Der Protokollumsetzer weist vorzugsweise eine Verbindungskomponente auf, die geeignet ist, Gerätedienste von an den Feldbus angeschlossenen Geräten zusammenzufassen oder aufzuteilen. Beispielsweise können simple Gerätedienste von zwei oder mehreren Geräten zu einem virtuellen komplexen Gerät, dem die mehreren simplen Gerätedienste zugeordnet werden, zusammengefasst werden. Alternativ können zwei oder mehrere Gerätedienste eines komplexen Gerätes aufgeteilt werden auf zwei oder mehrere virtuelle Geräte, wobei jedem Gerät mindestens eines der Gerätedienste zugeordnet wird. Beispielsweise kann ein Bewegungsmeldungsgerät aus den Komponenten Bewegungsmeldung und Helligkeitsmelder bestehen. Es ist nun denkbar, dass diese beiden (oder auch nur eine der beiden) Komponenten als zwei Geräte nach außen exportiert werden.

Die Vorrichtung weist eine Filtereinrichtung auf, die zwischen dem Netzwerkadapter und der Adressen-Vergabeeinrichtung oder dem Protokollumsetzer angeordnet ist.

Gemäß einem weiteren Aspekt ist die Konfigurationseinrichtung geeignet zur Vornahme von Konfigurationseinstellungen an mindestens einer der folgenden Einrichtungen, der Adressen-Vergabeeinrichtung oder dem Protokollumsetzer, der Filtereinrichtung und einem der Netzwerkadapter. Die Konfigurationseinrichtung ist optional geeignet zum Abruf von Verwaltungsinformationen, wobei die Konfigurationseinrichtung mit einem Dienste-Server verbindbar ist, der über diese Konfigurationseinrichtung Informationen über am Feldbus angeschlossene Geräte erhalten kann, auf die der Dienste-Server steuernd und/oder lesend Zugriffsrechte hat.

Die Konfigurationseinrichtung kann über eine eigene virtuelle oder die dem Gateway zugeordnete IP6-Adresse erreichbar sein. Über diese Konfigurationseinrichtung kann ein Diensterbringer, der auf die am Feldbus angeschlossenen Geräte steuernd oder lesen zugreifen möchte, Informationen über diese Geräte erhalten, wie z.B. Eigenschaften wie Typ, Herstellerangaben, oder andere Metainformationen.

Der Umfang dieser Informationen ist i.A. von der Feldbustechnologie und den angeschlossenen Geräten selber abhängig. Es ist aber auch denkbar, dass die Gateway-Vorrichtung über Möglichkeiten verfügt, diese auslesbaren Informationen mit weiteren Metadaten anzureichern (entweder über interne Verfahren oder über interne und externe Datenbanken).

Die Filtereinrichtung ist geeignet zum Implementieren von Sicherheitsmechanismen, wobei die Sicherheitsmechanismen ein Zugriffsschutz und/oder eine Authentifizierung- und Aktualisierungsfunktionen sind, wobei die Filtereinrichtung eine Datenbank mit einem Regelwerk für Sicherheitsmechanismen und Zugriffsschutz aufweist, und die Filtereinrichtung mittels der Datenbank über die Konfigurationseinrichtung einstellbar ist.

Die Filtereinrichtung wird dazu benutzt, abhängig von den implementierten Sicherheitsmechanismen, einzelne am Feldbus angeschlossene Geräte sichtbar oder nicht sichtbar im IPv6-Netzwerk zu machen. Das kann dazu dienen, um Geräte, die nur eine Feldbus-lokale Funktion erfüllen, nicht zugreifbar zu machen. Die Filtereinstellungen können über einen Konfigurationskanal vorgenommen werden, durch Voreinstellungen bereits festgelegt worden sein oder durch andere Verfahren bestimmt werden.

Somit kann zusätzlich zum Zugriffschutz auch das "Verbergen" von Geräten erreicht werden, so dass diese Geräte gar nicht erst eine IP-Adresse erhalten und damit nicht nach außen sichtbar sind. Vorzugsweise können je nach Identität und Autorisierung der Gegenstelle, bestimmte Geräte nicht sichtbar, nur auslesbar oder voll steuerbar sein.

Die Gateway-Vorrichtung kann auch mehr als einen Feldbus-Netzwerkadapter besitzen. So können unterschiedliche Feldbusse über die Gateway-Vorrichtung an das Internet angebunden werden.

Es können sich in einem lokalen Netzwerk, wie einem Heimnetz, auch zwei oder mehr Gateway-Vorrichtungen befinden, die unterschiedliche Feldbusse anbinden. Dieses kann vorteilhaft sein, wenn es aus physikalischen oder elektrotechnischen Gründen nicht möglich ist, mehrere Feldbustechnologien in einer Gateway-Vorrichtung zu installieren, z.B. wegen funktechnischer Interferenzen.

Im Folgenden wird die Wahl der IPv6-Adresse erläutert.

Eine Unicast IPv6-Adresse (s. http://de.wikipedia.org/w/index.php?title=IPv6&oldid=134400554) besteht aus einem sogenannten IPv6-Prefix, einem Subnet-Identifier und einem IPv6 Interface Identifier. Normalerweise erhält der Router eines Nutzers einen oder mehrere sogenannte IPv6-Prefixe. Der IPv6 Interface Identifier kann eine Länge von 64 Bit haben. So kann durch Kombinationen dieses IPv6-Prefix und der MAC-Adresse eines physikalischen Netzwerkadapters eine eindeutige IPv6-Adresse generiert werden (s.EUI-64-Verfahren, http://en.wikipedia.org/w/index.php?title=IPv6 address&oldid=627579935#Modified EUI-64).

Die hier vorgestellte Gateway-Vorrichtung kann nun für jedes angeschlossene Gerät je einen eigenen virtuellen Netzwerkadapter erzeugen, der eine eigene IPv6-Adresse erhält. Dazu kann es entweder aus einem vorgegebenen Bereich MAC-Adressen wählen, um nach dem oben beschriebenen Verfahren IPv6-Adressen zu erzeugen, oder diese MAC-Adressen zufällig ermitteln. Um eine Überlappung mit bereits vorhandenen IPv6-Adressen im lokalen Netz zu vermeiden, werden mittels Neighbor Solicitation und Neighbor Advertisement Überlappungen geprüft. Der erwähnte vorgegebene MAC-Adressbereich kann mittels Konfiguration des Gateways eingestellt werden.

Eine andere Methode ist es, einen vorhandenen DHCPv6-Server zu benutzen, um eine neue IPv6-Adresse zu erhalten (s. http://en.wikipedia.org/w/index.php?title=DHCPv6&oldid=611497664). Dieser befindet sich üblicherweise auf dem Heim-Router.

Alternativ ist der DHCPv6 Server auf einem anderen angeschlossenen Gerät oder PC oder auch auf einem IP2x-Gateway. Dabei kann der DHCPv6-Server sogar auch in einem anderen Subnetz angeordnet sein. IPv6 erlaubt, dass DHCPv6 Anfragen durch sogenannte Relaying in ein anderes Subnetz geleitet werden dürfen und dort von einem DHCPV6-Server beantwortet werden können.

Bei beiden Verfahren wird vorzugsweise darauf geachtet, dass der lokale Teil der IPv6-Adresse (Interface Identifier), der einem an den Feldbus angeschlossenen Gerät zugewiesen wird, immer gleich bleibt.

Bei einem Wechsel des IPv6-Prefixes durch den Internet Service Provider (ISP) werden von der Gateway-Vorrichtung entsprechend neue IPv6-Adressen erzeugt oder vom DHCPv6-Server erhalten. Diese Adressänderung wird über den Konfigurationskanal Diensteanbietern lokal oder im Weitverkehrsnetz angezeigt.

Im Folgenden wird das IPv6 Prefix Coloring näher erläutert.

Es ist einem Internet Service Provider (ISP) freigestellt, dem Heimnetz eines Nutzers mehr als einen IPv6-Prefix zuzuweisen. Dieses kann z.B. für die bessere Steuerung und Trennung des Datenverkehrs für bestimmte Dienste geschehen. So kann man z.B. den reinen Internetdatenverkehr von Telefondiensten und IPTV trennen, indem jeder dieser Dienste einen eigenen IPv6- Prefix erhält. Die anwendungsspezifische Bedeutung des jeweiligen IPv6-Prefix wird durch Metadaten näherbeschrieben und bestimmt. (s. http://www.ietf.org/proceedings/87/slides/slides-87-6man-10.pdf und http://tools.ietf.org/html/draft-lepape-6man-prefix-metadata-00).

Dem entsprechend ist es daher auch möglich, dass für die Gateway-Vorrichtung vom Internet Service Provider (ISP) ein eigener IPv6-Prefix vergeben wird. Ein Netzwerkrouter, wie ein Heimrouter ist vorzugsweise derart konfiguriert, dass der jeweiligen Gateway-Vorrichtung entsprechend dieser IPv6-Adressbereich zugeordnet werden kann.

Vorteile dieser Lösung sind, dass zum einen der Datenverkehr mit dieser Gateway-Vorrichtung individuell im WAN geroutet werden kann, z.B. für bessere Quality of Service (QoS), Sicherheit, Abrechnung etc., und dass es bei der Vergabe des lokalen Teils der IPv6-Adresse (IPv6 Interface Identifier) Überlappungen von Adressbereichen mit anderen Geräten vermieden werden können.

Die Erfindung hat den Vorteil, dass eine solche Vorrichtung, wie eine Gateway-Vorrichtung für jedes am Feldbus angeschlossene Gerät eine individuelle Repräsentation im IP-Netzwerk zur Verfügung stellt, indem es jedem am Feldbus angeschlossenen Gerät eine eigene IP-Adresse zuteilt. In einem IPv4-Netzwerk ist das nicht immer möglich, da in einem LAN die Anzahl der Geräte durch die Anzahl der lokal zur Verfügung stehenden IP-Adressen stark begrenzt ist. Es ist auch nur sehr schwer möglich, einzelnen IP-Adressen eine anwendungsspezifische Bedeutung zuzuordnen. Weiterhin ist in einem IPv4-Netzwerk der Zugriff aus der Ferne, insbesondere über das Internet nicht möglich, weil diese lokalen IP-Adressen nicht in einem WAN sichtbar und erreichbar sind. Weiterhin ist der Konfigurationsaufwand für Nutzer und Dienstbetreiber in einem solchen Fall zu groß und fehleranfällig. Es bestehen außerdem häufig Beschränkungen in der Anzahl lokaler Geräte, die ein Netzwerkrouter verwalten kann. Die Zahl der Feldbusgeräte kann leicht die lokal zur Verfügung stehenden IP-Adressen übersteigen. Durch ein direktes Ansprechen der Geräte mittels einer IPv6-Adresse werden diese individuell sowohl im Heimnetz als auch in einem Weitverkehrsnetz sichtbar und können direkt angesprochen werden. Eine Ableitung von Identifikationsnummern auf IP-Adressen kann entfallen.

Eine individuelle Rechtevergabe und Zugriffskontrolle kann mit üblichen IP-Mitteln, z.B. einer Firewall, erfolgen. Ein direkter Zugriff mittels Steuerungsanwendungen kann pro Gerät geschehen.

Durch ein IPv6 Prefix Coloring kann der Datenverkehr mit dem Gateway besser und sicherer behandelt werden.

Ein weiteres Anwendungsgebiet der Erfindung ist die Benutzung im Zusammenhang mit einem in der Cloud virtualisiertem Home Gateway (einem Gerät zur Haussteuerung) für das Connected Home (s. z.B. https://www.qivicon.com/). Ein solches Home Gateway besteht i.A. mindestens aus einer Komponente zur Anbindung an einen oder mehrere lokale Feldbusse und einer Komponente zur Speicherung und Verarbeitung von Daten. Die vorliegende Erfindung ermöglicht es nun, die Komponente zur Anbindung der Feldbusse zu ersetzen. Damit muss dann die verarbeitende Komponente eines solchen Home Gateways nicht mehr lokal vorliegen, sondern kann als virtuelles Home Gateway in der Cloud betrieben werden, welches über die erfindungsgemäße Vorrichtung auf die an dem oder den Feldbuss(en) angebundenen Geräte zugreift. Eine Gateway-Vorrichtung, wie sie hier beschrieben ist und bei dem die Verarbeitung aggregierter Daten in einem zentralen Cloud-Server geschieht, kann preiswerter hergestellt und vertrieben werden, als ein integriertes Home Gateway zur Heimautomatisierung. Weiterhin arbeitet die erfindungsgemäße Vorrichtung auf Grund des reduzierten Aufwands an Komponenten energiesparender.

Ein weiterer Aspekt der Erfindung bezieht sich auf ein System mit einem Router, der mit einem Dienste-Server verbindbar ist und eine Gateway-Vorrichtung wie oben beschrieben aufweist. Der Router ist mit der Gateway-Vorrichtung verbindbar oder der Router weist mindestens einen Teil der Einrichtungen der Gateway-Vorrichtung auf. Vorzugsweise weist der Router mindestens eine der folgenden Einrichtungen auf, mindestens einen Feldbus-Netzwerkadapter, die Adressen-Vergabeeinrichtung oder den Protokollumsetzer, die Filtereinrichtung optional mit einer Datenbank mit einem Regelwerk für Sicherheitsmechanismen und Zugriffsschutz und die Konfigurationseinrichtung.

Gemäß einem weiteren Aspekt weist der Heimrouter einen DHCPv6-Server und/oder eine Einrichtung auf, die den Präfix einer dem Router neu zugewiesenen IPv6 Adresse an die Adressen-Vergabeeinrichtung oder den Protokollumsetzer weitergibt. Die Adressen-Vergabeeinrichtung oder der Protokollumsetzer setzen aus dem Präfix und einem Interface Identifier eine individuelle IPv6-Adresse für jeweils ein an dem Feldbus angeschlossenes Gerät zusammen oder aktualisieren die individuelle IPv6-Adresse.

Wenn ein am Feldbus angeschlossenes Gerät erkannt wird (Discovery), dann wird diesem Gerät intern von der Adressen-Vergabeeinrichtung oder den Protokollumsetzer eine neue IPv6 Adresse zugewiesen, die sich aus dem IPv6 Präfix und einem IPv6 Interface Identifier zusammensetzt. Der in der Regel von einer äußeren Stelle an den Router zugewiesene Präfix des LAN kann dann benutzt werden, indem ein DHCPv6-Server bereitgestellt wird, der eben diesen Präfix an die Gesamtvorrichtung weitergibt. Alternativ kann das sogenannte "Neighbor Discovery Protocol" eingesetzt werden (s. http://en.wikipedia.org/wiki/Neighbor_Discovery_Protocol und IETF RFC 4861, Neighbor Discovery for IP version 6 (IPv6)), bei dem diese Informationen ebenfalls ausgetauscht werden können. In beiden Fällen wird erreicht, dass der IPv6-Prefix Bestandteil der Adressvergabe bzw. Autokonfiguration ist, wodurch ein Zugriff von außerhalb des LAN ermöglicht wird.

Gemäß noch einem weiteren Aspekt weist das System den Dienste-Server auf, der mindestens einen physikalischen IPv6-fähigen Netzwerkadapter, eine Abbildungseinrichtung von IPv6-Adressen auf physikalische Feldbusgeräte, eine Dienste-Erbringungseinrichtung und eine Einrichtung zur Konfiguration und Verwaltung auf.

Ein weiterer Aspekt der Erfindung betrifft einVerfahren zum Verbinden von Feldbusgeräten mit dem Internet vorzugsweise mittels der oben beschriebenen Gateway-Vorrichtung bzw. mit dem oben beschriebenen System mit den Schritten:
Anschließen mindestens eines Netzwerkadapters an ein IPv6-Netzwerk,
Anschließen mindestens eines Feldbus-Netzwerkadapters an einen zugehörigen Feldbus und
Konfigurieren mindestens eines virtuellen IPv6-Netzwerkadapters mit einer individuellen IPv6-Adresse für jeweils ein an dem Feldbus angeschlossenes Gerät mittels einer Adressen-Vergabeeinrichtung.

### Gemäß einem weiteren Aspekt weist das Verfahren die weiteren Schritte auf:

Vergeben eines IPv6 Interface Identifiers, vorzugsweise als einen lokalen Teil einer individuellen IPv6-Adresse, der für das angeschlossene Gerät eindeutig ist, mittels der Adressen-Vergabeeinrichtung, wobei
die IPv6-Adresse einen IPv6- Prefix und den lokalen Teil der IPv6-Adresse aufweist, wobei vorzugsweise der IPv6- Prefix in bestimmten Zeitabständen, besonders bevorzugt nach jeweils einem Tag geändert wird.

### Gemäß einem weiteren Aspekt weist das Verfahren die weiteren Schritte auf:

Umsetzen mindestens eines Teils eines Feldbusprotokolls in eine IPv6-fähige Repräsentation, und umgekehrt mittels der Adressen-Vergabeeinrichtung, die einen Protokollumsetzer aufweist, wobei die IPv6-Repräsentation eine textartige oder binäre Repräsentation darstellt und Zusammenzufassen oder Aufteilen von Gerätedienste von an den Feldbus angeschlossenen Geräten mittels des Protokollumsetzers, der vorzugsweise eine Verbindungskomponente aufweist.

### Das Verfahren weist die weiteren Schritte auf:

Vornahme von Konfigurationseinstellungen mittels einer Konfigurationseinrichtung an mindestens einer der folgenden Einrichtungen, der Adressen-Vergabeeinrichtung oder dem Protokollumsetzer, einer Filtereinrichtung und einem der Netzwerkadapter wobei die Filtereinrichtung zwischen dem Netzwerkadapter und der Adressen-Vergabeeinrichtung oder dem Protokollumsetzer angeordnet ist

### Gemäß einem weiteren Aspekt weist das Verfahren die weiteren Schritte auf:

Abrufen von Verwaltungsinformationen mittels der Konfigurationseinrichtung, wobei die Konfigurationseinrichtung mit einem Dienste-Server verbindbar ist, der über diese Konfigurationseinrichtung Informationen über am Feldbus angeschlossene Geräte erhalten kann, auf die der Dienste-Server steuernd und/oder lesend Zugriffsrechte hat.

### Das Verfahren weist die weiteren Schritte auf: i

Implementieren von Sicherheitsmechanismen, wobei die Sicherheitsmechanismen ein Zugriffsschutz und/oder eine Authentifizierung- und Aktualisierungsfunktionen sind, mittels der Filtereinrichtung, wobei die Filtereinrichtung eine Datenbank mit einem Regelwerk für Sicherheitsmechanismen und Zugriffsschutz aufweist, und die Filtereinrichtung mittels der Datenbank über die Konfigurationseinrichtung einstellbar ist.

### Das Verfahren weist die weiteren Schritte auf:

sichtbar oder nicht sichtbar machen eines am Feldbus angeschlossenen Gerätes für einen Dienste-Server im IPv6-Netzwerk Feldbusgerätes für einen Lesezugriff und/oder einen Vollsteuerungszugriff auf das Gerät, mittels der Filtereinrichtung, abhängig von den implementierten Sicherheitsmechanismen.

### Kurze Beschreibung der Zeichnung

Im Folgenden wird die erfindungsgemäße Vorrichtung, das erfindungsgemäße System, der erfindungsgemäße Dienste-Server und das erfindungsgemäße Verfahren unter Bezugnahme auf die beigefügten Zeichnungen anhand von Ausführungsbeispielen detaillierter beschrieben. Es zeigen:
Fig. 1 ein schematisches Blockdiagram eines Systems mit einer Gateway-Vorrichtung gemäß einem Ausführungsbeispiel der Erfindung und
Fig. 2 ein schematisches Flussdiagram eines weiteren Ausführungsbeispiels der Erfindung betreffend ein Verfahren zur Ermittlung der IPv6-Adresse für ein angeschlossenes Gerät.

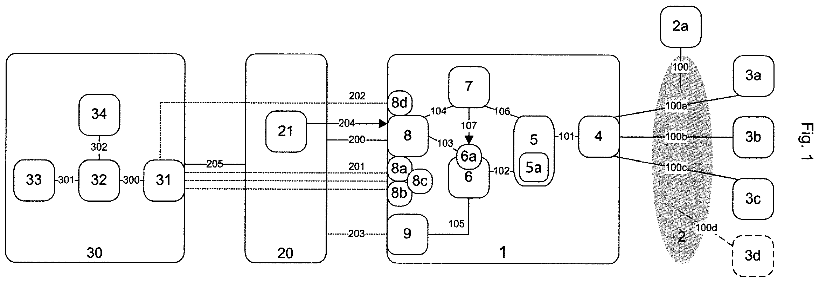

Das in Figur 1 gezeigte schematische Blockdiagramm betrifft ein System mit einer Gateway-Vorrichtung zum Verbinden von Feldbusgeräten mit dem Internet. Die Gateway-Vorrichtung 1 ist einerseits mit einem Feldbus 2 verbunden und andererseits mit einem Netzwerkrouter, im vorliegenden Beispiel mit einem Heimrouter 20. Der Heimrouter 20 ist über das Internet mit einem Dienste-Server 30 verbunden.

An dem Feldbus 2 sind in diesem Ausführungsbeispiel vier Feldbusgeräte 3a, 3b, 3c und dem 3d angeschlossen. Davon sind nur drei Feldbusgeräte 3a, 3b, 3c über eine zugehörige Datenverbindungen 100a, 100b, 100c mit dem physikalischen Feldbusadapter 4 verbunden und von außerhalb des Feldbusses steuerbar und lesbar. Diese Geräte werden aus dem Feldbus exportiert. Wie durch die gestrichelte Linie angedeutet, ist das Feldbusgerät 3d über eine Datenverbindung 100d ebenfalls an dem Feldbus 2 angeschlossen, aber nur innerhalb des Feldbusses 2 verfügbar. Außerdem ist an dem Feldbus über eine Datenverbindung 100 eine Steuer- und Leseeinrichtung 2a angeschlossen, welche die Geräte 3a, 3b, 3c und 3d steuern und auslesen kann. Die Steuer- und Leseeinrichtung 2a dient zur feldbusinternen Steuerung insbesondere des Feldbusgerätes 3d, welches nicht exportiert wird und nur innerhalb des Feldbusses bekannt ist,

Die Gateway-Vorrichtung 1 weist einen physikalischen Feldbus-Netzwerkadapter 4 auf, über den die Verbindung mit dem Feldbus 2 hergestellt wird. Der physikalische Feldbus-Netzwerkadapter 4 ist über eine erste interne Datenkommunikation 101 mit einem Protokollumsetzer 5 verbunden, der zur Umsetzung eines Feldbusprotokolls in eine IPv6-Repräsentation dient. Der Protokollumsetzer 5 weist in diesem Ausführungsbeispiel eine Verbindungskomponente 5a auf, die dazu dient, Gerätedienste von an dem Feldbus 2 angeschlossenen Geräten 3a, 3b, 3c zusammenzufassen oder aufzuteilen. Beispielsweise können einfache Dienste von zwei Geräten 3a und 3b zu einem neuen, komplexen Gerät, d.h. einem virtuellen Gerät 3ab' zusammengesetzt werden. Als weiteres Beispiel können mehrere Dienste eines Komplexen Gerätes 3c zu zwei virtuellen Geräten 3c' und 3c" aufgeteilt werden.

Der Protokollumsetzer 5 ist in diesem Beispiel über eine zweite interne Datenkommunikation 102 mit einer Filtereinrichtung 6 verbunden. Die Filtereinrichtung 6 weist eine Datenbank 6a auf, die Daten und insbesondere ein Regelwerk für Sicherheit und Zugriffsregeln enthält.

Die Gateway-Vorrichtung 1 weist weiterhin einen physikalischen IPv6 Netzwerkadapter 8 auf, der über eine dritte interne Datenkommunikation 103 mit der Filtereinrichtung 6 verbunden ist.

Die Gateway-Vorrichtung 1 weist weiterhin eine Konfigurationseinrichtung 7 auf, die über eine vierte interne Datenkommunikation 104 mit dem physikalischen IPv6 Netzwerkadapter 8 verbunden ist.

Die Gateway-Vorrichtung 1 weist in diesem Beispiel außerdem einen physikalischen IPv4 Netzwerkadapter 9 auf, der über eine fünfte interne Datenkommunikation 105 mit der Filtereinrichtung 6 verbunden ist.

Die Konfigurationseinrichtung 7 ist über eine sechste interne Datenkommunikation 106 zur Konfiguration mit dem Protokollumsetzer 5 verbunden.

Eine siebte interne Datenkommunikation 107 dient der Datenkommunikation zwischen der Konfigurationseinrichtung 7 und der Filtereinrichtung 6 zur Konfiguration der Filterkomponente sowie von Sicherheits- und Zugriffsregeln.

Der physikalische IPv6 Netzwerkadapter 8 dient zum Generieren von virtuellen IPv6 Netzwerkadaptern 8a, 8b und 8c, die den Feldbusgeräten 3a, 3b und 3c zugeordnet sind. Der physikalische IPv6 Netzwerkadapter 8 generiert außerdem einen virtuellen IPv6 Netzwerkadapter 8d, über den von einem Dienste-Server 30 auf die Konfigurationseinrichtung 7 von außen zugegriffen werden kann.

Der Netzwerkrouter 20 ist in dem Beispiel über eine physikalische LAN-Verbindung 200 mit der Gateway-Vorrichtung 1 verbunden. Für jedes angeschlossene Feldbusgerät wird eine virtuelle IPv6 Verbindung 201 von den virtuellen IPv6 Netzwerkadapter 8a, 8b, 8c und 8d zu dem Netzwerkrouter 20 und von diesem weiter zum Internet bereitgestellt. Die virtuelle IPv6 Verbindung(en) 201 führen zu einem Dienste-Server 30, der im Internet angeordnet ist.

Der Netzwerkrouter 20 weist in diesem Beispiel einen DHCPv6-Server 21 auf. Der DHCPv6-Server 21 ist über eine Verbindung 204 mit dem physikalischen IPv6 Netzwerkadapter 8 verbunden und geeignet eine DHCPv6 Adressvergabe durchzuführen.

Der Netzwerkrouter 20 ist weiterhin über eine virtuelle IPv4 Verbindung 203 mit dem physikalischen IPv4 Netzwerkadapter 9 verbunden.

Der Dienste-Server 30 weist einen physikalischen IPv6 Netzwerkadapter 31 auf, der mit dem Internet in Verbindung steht und über eine WAN-Verbindung 205 mit dem Netzwerkrouter kommuniziert. Der Dienste-Server 30 weist außerdem eine Abbildungseinrichtung 32 von IPv6-Adressen auf physikalische Feldbusgeräte, eine Dienste-Erbringungseinrichtung 33 und eine Konfigurations- und Verwaltungseinrichtung 34 zur Konfiguration und Verwaltung von Feldbusgeräten auf. Der physikalische IPv6 Netzwerkadapter 31 ist mit der Abbildungseinrichtung 32 über eine Datenkommunikation 300 verbunden. Die Abbildungseinrichtung 32 ist über eine Datenkommunikation 310 mit Dienste-Erbringungseinrichtung 33 verbunden. Die Abbildungseinrichtung 32 ist außerdem über eine Datenkommunikation 302 mit der Konfigurations- und Verwaltungseinrichtung 34 verbunden.

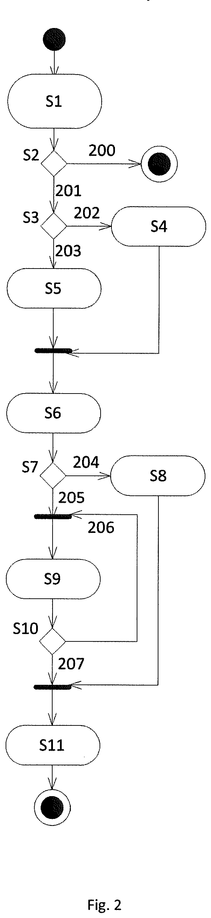

Im Folgenden wird ein Ausführungsbeispiel eines Verfahrens zum Ermitteln der IPv6-Adresse für ein angeschlossenes Gerät anhand der Figur 2 erläutert. Dieses Flussdiagram beschreibt das Anmelden von Geräten mit der Zuweisung von IPv6-Adressen in Abhängigkeit davon, ob es einen DHCPv6-Server gibt oder nicht.

Das Flussdiagram beginnt mit Schritt S1 bei dem ein Gerät am Feldbus angeschlossen wird und von einer Gateway-Vorrichtung erkannt wird.

Im Schritt S2 wird die Konfigurationsdatenbank konsultiert und geprüft, ob das angeschlossene und von der Gateway-Vorrichtung erkannte Gerät der IPv6 angemeldet werden soll. Im Fall, dass das Gerät nicht angemeldet werden soll, endet das Verfahren und die Aktivität wird am Punkt 200 beendet.

Im Fall, dass das Gerät angemeldet werden soll, geht es über 201 weiter zum Schritt S3. Beim Schritt S3 wird die Konfigurationsdatenbank konsultiert und geprüft ob dasselbe Gerät bereits schon einmal angemeldet worden ist und einen IPv6 Interface Identifier erhalten hat. Im Fall, dass das Gerät in der Vergangenheit bereits eine IPv6 Interface Identifier erhalten hat, geht es über 202 zum Schritt S4. Beim Schritt S4 wird die früher vergebene IPv6 Interface Identifier dem Gerät zugewiesen. Daran schließt sich Schritt S6 an. Im Fall, dass das Gerät in der Vergangenheit noch keinen IPv6 Interface Identifier erhalten hat, geht es über 203 zum Schritt S5. Beim Schritt S5 wird ein erster IPv6 Interface Identifier für das von der Gateway-Vorrichtung erkannte Gerät ermittelt. Dies kann durch einen Zufallsalgorithmus geschehen. Alternativ wird der Identifier des am Feldbus erkannten Geräts ermittelt und daraus ein erster IPv6 Interface Identifier ermittelt. Hieran schließt sich der Schritt S6 an. Im Schritt S6 wird ein virtueller IPv6 Netzwerkadapter für das von der Gateway-Vorrichtung erkannte Gerät erzeugt und angemeldet.

Beim folgenden Schritt S7 wird geprüft, ob es im lokalen Netzwerk (LAN) einen zuständigen DHCPv6-Server gibt. Wenn im lokalen Netzwerk ein zuständiger DHCPv6-Server vorhanden ist, geht es über 204 zum Schritt S8. Beim Schritt S8 fordert die Gateway-Vorrichtung beim DHCPv6-Server für den ermittelten IPv6-Interface Identifier des Gerätes eine IPv6-Adresse an. Hierauf folgt Schritt S11.

Ist im lokalen Netzwerk kein zuständiger DHCPv6-Server vorhanden, so geht es über 205 zum Schritt S9. Beim Schritt S9 kann eine eigene IPv6-Adresse auf Basis des IPv6-Interface Identifier und der IPv6-Adresse der Gateway-Vorrichtung vergeben werden. Dies erfolgt z.B. durch das "modified EUI-64-Verfahren". Optional wird ein neuer IPv6-Interface Identifier erzeugt. Hieran schließt sich der Schritt S10 an. Beim Schritt S10 wird geprüft, ob die vergebene bzw. ermittelte IPv6-Adresse bereits im lokalen Netzwerk verwendet wird. Dies erfolgt z.B. mittels des Neighbor Solicitation und Neighbor Advertisement - Verfahrens. Wenn die Adresse bereits verwendet wird, folgt über 206 eine Wiederholung des Schritts S9, d.h. die IPv6-Adresse wird erneut ermittelt. Wird die Adresse noch nicht verwendet, so wird über 207 das Verfahren zu Schritt S11 fortgesetzt.

Beim Schritt S11 werden in der Konfigurationsdatenbank für das gefundene Gerät die zugewiesene IPv6 Adresse und der ermittelte IPv6 Interface Identifier gespeichert. Unter dieser gespeicherten Adresse ist das an den Feldbus angeschlossene Gerät von außen erreichbar.

Obwohl die Erfindung mittels der Figuren und der zugehörigen Beschreibung dargestellt und detailliert beschrieben ist, sind diese Darstellung und diese detaillierte Beschreibung illustrativ und beispielhaft zu verstehen und nicht als die Erfindung einschränkend. Es versteht sich, dass Fachleute Änderungen und Abwandlungen machen können, ohne den Umfang und den Geist der folgenden Ansprüche zu verlassen. Insbesondere umfasst die Erfindung ebenfalls Ausführungsformen mit jeglicher Kombination von Merkmalen, die vorstehend oder nachfolgend zu verschiedenen Ausführungsformen genannt oder gezeigt sind.

Die Erfindung umfasst ebenfalls einzelne Merkmale in den Figuren auch wenn sie dort im Zusammenhang mit anderen Merkmalen gezeigt sind und/oder vorstehend oder nachfolgend nicht genannt sind. Auch können die in den Figuren und der Beschreibung beschriebenen Alternativen von Ausführungsformen und einzelne Alternativen deren Merkmale vom Erfindungsgegenstand beziehungsweise von den offenbarten Gegenständen ausgeschlossen sein. Die Offenbarung umfasst Ausführungsformen, die ausschließlich die in den Ansprüchen beziehungsweise in den Ausführungsbeispielen beschriebenen Merkmale umfasst sowie auch solche, die zusätzliche andere Merkmale umfassen.

Im Weiteren schließt der Ausdruck "umfassen" und Ableitungen davon andere Elemente oder Schritte nicht aus. Ebenfalls schließt der unbestimmte Artikel "ein" bzw. "eine" und Ableitungen davon eine Vielzahl nicht aus. Die Funktionen mehrerer in den Ansprüchen aufgeführter Merkmale können durch eine Einheit beziehungsweise einen Schritt erfüllt sein. Die Begriffe "im Wesentlichen", "etwa", "ungefähr" und dergleichen in Verbindung mit einer Eigenschaft beziehungsweise einem Wert definieren insbesondere auch genau die Eigenschaft beziehungsweise genau den Wert. Die Begriffe "etwa" und "ungefähr" im Zusammenhang mit einem gegebenen Zahlenwert oder -bereich kann sich auf einen Wert beziehungsweise Bereich beziehen, der innerhalb 20%, innerhalb 10%, innerhalb 5% oder innerhalb 2% des gegebenen Werts beziehungsweise Bereichs liegt. Ein Computerprogramm kann auf einem geeigneten Medium gespeichert sein und/oder vertrieben werden, wie beispielsweise auf einem optischen Speichermedium oder einem Festmedium, das zusammen mit oder als Teil von anderer Hardware bereitgestellt wird. Es kann auch in anderer Form vertrieben werden, wie beispielsweise über das Internet oder andere verkabelte oder unverkabelte Telekommunikationssysteme. Insbesondere kann ein Computerprogramm beispielsweise ein auf einem computerlesbaren Medium gespeichertes Computerprogrammprodukt sein, das dazu ausgestaltet ist, ausgeführt zu werden, um ein Verfahren zu implementieren, insbesondere das erfindungsgemäße Verfahren. Alle Bezugszeichen in den Ansprüchen sind nicht als den Umfang der Ansprüche einschränkend zu verstehen.

## Patentansprüche

1. Gateway-Vorrichtung mit:
mindestens einem Netzwerkadapter (8) zum Anschluss an ein IPv6-Netzwerk,
mindestens einem Feldbus-Netzwerkadapter (4) zum Anschluss an einen zugehörigen Feldbus, und
einer Adressen-Vergabeeinrichtung (5) zum Konfigurieren mindestens eines virtuellen IPv6-Netzwerkadapters (8a, 8b, 8c) mit einer individuellen IPv6-Adresse für jeweils ein an dem Feldbus angeschlossenes Gerät.
**dadurch gekennzeichnet dass**:
die Vorrichtung eine Filtereinrichtung (6) aufweist, die zwischen dem Netzwerkadapter (8) und der Adressen-Vergabeeinrichtung oder dem Protokollumsetzer (5) angeordnet ist und eine Konfigurationseinrichtung (7) aufweist, die geeignet ist zur Vornahme von Konfigurationseinstellungen an mindestens einer der folgenden Einrichtungen, der Adressen-Vergabeeinrichtung (5) oder dem Protokollumsetzer (5), der Filtereinrichtung (6) und einem der Netzwerkadapter (8a, 8b, 8c),
wobei die Filtereinrichtung (6) geeignet ist zum Implementieren von Sicherheitsmechanismen,
wobei die Sicherheitsmechanismen ein Zugriffsschutz und/oder Authentifizierung- und Aktualisierungsfunktionen sind, wobei die Filtereinrichtung (6) eine Datenbank (6a) mit einem Regelwerk für Sicherheitsmechanismen und Zugriffsschutz aufweist, und die Filtereinrichtung (6) mittels der Datenbank (6a) über die Konfigurationseinrichtung (7) einstellbar ist, und
wobei die Filtereinrichtung (6) geeignet ist, abhängig von den implementierten Sicherheitsmechanismen, ein am Feldbus angeschlossenes Gerät für einen Dienste-Server im IPv6-Netzwerkfür einen Lesezugriff und/oder einen Vollsteuerungszugriff auf das Gerät sichtbar oder nicht sichtbar zu machen.

2. Vorrichtung nach Anspruch 1, wobei
die Adressen-Vergabeeinrichtung geeignet ist, einen IPv6 Interface Identifier, vorzugsweise als einen lokalen Teil einer individuellen IPv6-Adresse zu vergeben, der für das angeschlossene Gerät eindeutig ist und wobei
die IPv6-Adresse einen IPv6-Prefix und den lokalen Teil der IPv6-Adresse aufweist, wobei vorzugsweise der IPv6-Prefix in bestimmten Zeitabständen, besonders bevorzugt nach jeweils einem Tag geändert wird.

3. Vorrichtung nach Anspruch 1 oder 2, wobei die Adressen-Vergabeeinrichtung einen Protokollumsetzer (5) aufweist, der geeignet ist zur Umsetzung mindestens eines Teils eines Feldbusprotokolls in einer IPv6-fähigen Repräsentation, und umgekehrt, wobei die IPv6-Repräsentation eine textartige oder binäre Repräsentation darstellt und der Protokollumsetzer vorzugsweise eine Verbindungskomponente (5a) aufweist, die geeignet ist, Gerätedienste von an den Feldbus angeschlossenen Geräten zusammenzufassen oder aufzuteilen.

4. Vorrichtung nach einem der Ansprüche 1 bis 3, wobei die Konfigurationseinrichtung (7) geeignet ist zum Abruf von Verwaltungsinformationen, wobei die Konfigurationseinrichtung (7) mit einem Dienste-Server verbindbar ist, der über diese Konfigurationseinrichtung (7) Informationen über am Feldbus angeschlossene Geräte erhalten kann, auf die der Dienste-Server steuernd und/oder lesend Zugriffsrechte hat.

5. Vorrichtung nach einem der vorstehenden Ansprüche mit mindestens einem IPv4-fähigen Netzwerkadapter zum Anschluss an ein IPv4-Netzwerk, der geeignet zum Zugreifen auf mindestens ein am Feldbus angeschlossenes Gerät.

6. System mit einem Router (20), der mit einem Dienste-Server (30) verbindbar ist und einer Gateway-Vorrichtung nach einem der vorstehenden Ansprüche, wobei der Router mit der Gateway-Vorrichtung verbunden ist oder der Router mindestens einen Teil der Einrichtungen der Gateway-Vorrichtung aufweist, wobei vorzugsweise der Router mindestens eine der folgenden Einrichtungen aufweist, mindestens einen Feldbus-Netzwerkadapter (4), die Adressen-Vergabeeinrichtung (5) oder den Protokollumsetzer (5), die Filtereinrichtung (6) optional mit einer Datenbank (6a) mit einem Regelwerk für Sicherheitsmechanismen und Zugriffsschutz und die Konfigurationseinrichtung (7).

7. System nach Anspruch 6, wobei der Router (20) einen DHCPv6-Server (21) aufweist und/oder eine Einrichtung aufweist, die den IPv6-Prefix einer dem Router neu zugewiesenen IPv6-Adresse an die Adressen-Vergabeeinrichtung (5) oder den Protokollumsetzer (5) weitergibt, die/der aus dem IPv6-Prefix und einem IPv6 Interface Identifier eine individuelle IPv6-Adresse für jeweils ein an dem Feldbus angeschlossenes Gerät zusammensetzt oder aktualisiert.

8. System mit einem Dienste-Server und einer Gateway-Vorrichtung nach einem der Ansprüche 1 bis 5, das mit einem System nach Anspruch 6 oder 7 verbindbar ist, wobei der Dienste-Server (30) mindestens einen physikalischen IPv6-fähigen Netzwerkadapter (31), eine Abbildungseinrichtung (32) von IPv6-Adressen auf physikalische Feldbusgeräte, eine Dienste-Erbringungseinrichtung (33) und eine Einrichtung (34) zur Konfiguration und Verwaltung aufweist.

9. Verfahren zum Verbinden von Feldbusgeräten mit dem Internet vorzugsweise mittels einer Gateway-Vorrichtung nach einem der Ansprüche 1 bis 5 oder mit einem System nach Anspruch 6 oder 7 mit den Schritten:
Anschließen mindestens eines Netzwerkadapters (8) an ein IPv6-Netzwerk,
Anschließen mindestens eines Feldbus-Netzwerkadapters (4) an einen zugehörigen Feldbus,
Konfigurieren mindestens eines virtuellen IPv6-Netzwerkadapters (8a, 8b, 8c) mit einer individuellen IPv6-Adresse für jeweils ein an dem Feldbus angeschlossenes Gerät mittels einer Adressen-Vergabeeinrichtung (5),
Vornahme von Konfigurationseinstellungen mittels einer Konfigurationseinrichtung (7) an mindestens einer der folgenden Einrichtungen, der Adressen-Vergabeeinrichtung (5) oder dem Protokollumsetzer (5), einer Filtereinrichtung (6) und einem der Netzwerkadapter (8a, 8b, 8c), wobei die Filtereinrichtung (6) zwischen dem Netzwerkadapter (8) und der Adressen-Vergabeeinrichtung oder dem Protokollumsetzer (5) angeordnet ist,
**gekennzeichnet durch**:
Implementieren von Sicherheitsmechanismen mittels der Filtereinrichtung (6), wobei die Sicherheitsmechanismen ein Zugriffsschutz und/oder Authentifizierung- und Aktualisierungsfunktionen sind, wobei die Filtereinrichtung (6) eine Datenbank (6a) mit einem Regelwerk für Sicherheitsmechanismen und Zugriffsschutz aufweist, und die Filtereinrichtung (6) mittels der Datenbank (6a) über die Konfigurationseinrichtung (7) einstellbar ist, und
sichtbar oder nicht sichtbar machen eines am Feldbus angeschlossenen Gerätes für einen Dienste-Server im IPv6-Netzwerk für einen Lesezugriff und/oder einen Vollsteuerungszugriff auf das Gerät mittels der Filtereinrichtung (6) abhängig von den implementierten Sicherheitsmechanismen.

10. Verfahren nach Anspruch 9, mit den weiteren Schritten:
Vergeben eines IPv6 Interface Identifiers, vorzugsweise als einen lokalen Teil einer individuellen IPv6-Adresse, der für das angeschlossene Gerät eindeutig ist, mittels der Adressen-Vergabeeinrichtung, wobei
die IPv6-Adresse einen IPv6-Prefix und den lokalen Teil der IPv6-Adresse aufweist, wobei vorzugsweise der IPv6-Prefix in bestimmten Zeitabständen, besonders bevorzugt nach jeweils einem Tag geändert wird.

11. Verfahren nach Anspruch 9 oder 10, mit den weiteren Schritten:
Umsetzen mindestens eines Teils eines Feldbusprotokolls in eine IPv6-fähige Repräsentation, und umgekehrt mittels der Adressen-Vergabeeinrichtung, die einen Protokollumsetzer (5) aufweist, wobei die IPv6-Repräsentation eine textartige oder binäre Repräsentation darstellt und Zusammenzufassen oder Aufteilen von Gerätediensten von an den Feldbus angeschlossenen Geräten mittels des Protokollumsetzers, der vorzugsweise eine Verbindungskomponente (5a) aufweist.

12. Verfahren nach Anspruch 9, mit den weiteren Schritten:
Abrufen von Verwaltungsinformationen mittels der Konfigurationseinrichtung (7), wobei die Konfigurationseinrichtung (7) mit einem Dienste-Server verbindbar ist, der über diese Konfigurationseinrichtung (7) Informationen über am Feldbus angeschlossene Geräte erhalten kann, auf die der Dienste-Server steuernd und/oder lesend Zugriffsrechte hat.

## Claims

1. A gateway device comprising:
at least one network adapter (8) for connection to an IPv6 network,
at least one fieldbus network adapter (4) for connection to an associated fieldbus, and
an address assignment device (5) for configuring at least one virtual IPv6 network adapter (8a, 8b, 8c) with an individual IPv6 address for each device connected to the fieldbus,
**characterized in that**
the device comprises a filter device (6) which is located between the network adapter (8) and the address assignment device or the protocol converter (5) and comprises a configuration means (7) suitable for performing settings of configuration of at least one of the following devices: the address assignment device (5) or the protocol converter (5),
the filter device (6) and one of the network adapters (8a, 8b, 8c),
wherein the filter device (6) is suitable for implementing safety mechanisms, the safety mechanisms being an access protection and/or authentication and update functions,
wherein the filter device (6) comprises a database (6a) with rules for safety mechanisms and access protection, and the filter device (6) is adjustable via the configuration means (7) by means of the database (6a), and
wherein, depending on the implemented safety mechanisms, the filter device (6) is suitable for making a device connected to the fieldbus visible or non-visible for an application server in the IPv6 network for reading access and/or full control access to the device.

2. The device according to claim 1, wherein
the address assignment device is suitable for assigning an IPv6 interface identifier, preferably as a local part of an individual IPv6 address, which is unique for the connected device and wherein
the IPv6 address comprises an IPv6 prefix and the local part of the IPv6 address, wherein preferably the IPv6 prefix is changed at certain time intervals, particularly preferably after one day.

3. The device according to claim 1 or 2, wherein the address assignment device comprises a protocol converter (5) which is suitable for converting at least a part of a fieldbus protocol into an IPv6-capable representation, and vice versa, wherein the IPv6 representation is a textual or binary representation and the protocol converter preferably comprises a connection component (5a) suitable for compiling or dividing device services of devices connected to the fieldbus.

4. The device according to any one of claims 1 to 3, wherein the configuration means (7) is suitable for requesting administration information, wherein the configuration means (7) is connectable to an application server which may obtain information about devices connected to the fieldbus via said configuration means (7), to which the application server has access rights in a controlling and/or reading manner.

5. The device according to any one of the preceding claims having at least one IPv4-capable network adapter for connection to an IPv4 network which is suitable for access to at least one device connected to the fieldbus.

6. A system with a router (20) connectable to an application server (30) and a gateway device according to any one of the preceding claims, wherein the router is connected to the gateway device or the router comprises at least a part of the means of the gateway device, wherein the router preferably comprises one of the following means: at least one fieldbus network adapter (4), the address assignment device (5) or the protocol converter (5), the filter device (6) optionally with a database (6a) comprising rules for safety mechanisms and access protection and the configuration means (7).

7. The system according to claim 6, wherein the router (20) comprises a DHCPv6 server (21) and/or means passing on the IPv6 prefix of an IPv6 address newly assigned to the router to the address assignment device (5) or the protocol converter (5) which compiles or updates an individual IPv6 address from the IPv6 prefix and an IPv6 interface identifier for each device connected to the fieldbus.

8. A system comprising an application server and a gateway device according to any one of claims 1 to 5 and being connectable to a system according to claim 6 or 7, wherein the application server (30) comprises at least a physical IPv6-capable network adapter (31), a mapping means (32) of IPv6 addresses to physical fieldbus devices, a service provider means (33) and a device (34) for configuration and administration.

9. A method of connecting fieldbus devices to the Internet preferably by means of a gateway device according to any one of claims 1 to 5 or a system according to claim 6 or 7 comprising the steps of:
connecting at least one network adapter (8) to an IPv6 network,
connecting at least one fieldbus network adapter (4) to an associated fieldbus,
configuring at least one virtual IPv6 network adapter (8a, 8b, 8c) with an individual IPv6 address for each device connected to the fieldbus by means of an address assignment device (5),
executing configuration settings by means of a configuration means (7) of at least one of the following means: the address assignment device (5) or the protocol converter (5), a filter device (6) and one of the network adapters (8a, 8b, 8c), wherein the filter device (6) is located between the network adapter (8) and the address assignment device or the protocol converter (5),
**characterized by**:
implementing safety mechanisms by means of the filter device (6), the safety mechanisms being an access protection and/or authentication and update functions,
wherein the filter device (6) comprises a database (6a) with rules for safety mechanisms and access protection, and the filter device (6) is adjustable by means of the database (6a) via the configuration means (7), and
making a device connected to the fieldbus visible or non-visible for an application server in the IPv6 network for reading access and/or full control access to the device, by means of the filter device (6), depending on the implemented safety mechanism.

10. The method according to claim 9, comprising the further steps:
assigning an IPv6 interface identifier, preferably as a local part of an individual IPv6 address which is unique for the connected device by means of the address assignment device, wherein
the IPv6 address has an IPv6 prefix and the local part of the IPv6 address, wherein preferably the IPv6 prefix is changed at certain time intervals, particularly preferably after one day.

11. The method according to claim 9 or 10, comprising the further steps:
converting at least a part of a fieldbus protocol into an IPv6-capable representation, and vice versa, by means of the address assignment device having a protocol converter (5),
wherein the IPv6 representation is a textual or binary representation, and compiling or dividing device services of devices connected to the fieldbus via the protocol converter which preferably has a connection component (5a).

12. The method according to claim 9, comprising the further steps:
requesting administration information via the configuration means (7), wherein the configuration means (7) is connectable to an application server which may obtain information about devices connected to the fieldbus via said configuration means (7), to which the application server has access rights in a controlling and/or reading manner.

## Revendications

1. Dispositif passerelle, comprenant :
au moins un adaptateur réseau (8) pour connexion à un réseau IPv6,
au moins un adaptateur réseau à bus de terrain (4) pour connexion à un bus de terrain correspondant, et
un dispositif d'attribution d'adresse (5) pour la configuration d'au moins un adaptateur réseau IPv6 virtuel (8a, 8b, 8c) avec une adresse IPv6 individuelle pour un appareil respectif connecté au bus de terrain,
**caractérisé en ce que** :
le dispositif présente un dispositif de filtre (6) disposé entre l'adaptateur réseau (8) et le dispositif d'attribution d'adresse ou le convertisseur de protocole (5), et un dispositif de configuration (7) adapté pour effectuer des paramétrages de configuration sur au moins un des dispositifs suivants, le dispositif d'attribution d'adresse (5) ou le convertisseur de protocole (5), le dispositif de filtre (6) et un des adaptateurs réseau (8a, 8b, 8c),
le dispositif de filtre (6) étant adapté pour implémenter des mécanismes de sécurité, lesdits mécanismes de sécurité étant une protection anti-accès et/ou des fonctions d'authentification et d'actualisation, le dispositif de filtre (6) comportant une base de données (6a) avec un ensemble de règles pour des mécanismes de sécurité et une protection anti-accès, et le dispositif de filtre (6) étant paramétrable par le dispositif de configuration (7) au moyen de la base de données (6a), et le dispositif de filtre (6) étant adapté pour rendre visible ou non visible, en fonction des mécanismes de sécurité implémentés, un appareil connecté au bus de terrain pour un serveur de services dans le réseau IPv6, pour un accès en lecture et/ou un accès en commande illimitée audit appareil.

2. Dispositif selon la revendication 1, où
le dispositif d'attribution d'adresse est adapté pour attribuer un identifiant d'interface IPv6, préférentiellement comme fraction locale d'une adresse IPv6 individuelle, univoque pour l'appareil connecté, et où
l'adresse IPv6 comprend un préfixe IPv6 et la fraction locale de l'adresse IPv6, le préfixe IPv6 étant avantageusement modifié à intervalles temporels définis, préférentiellement chaque jour.

3. Dispositif selon la revendication 1 ou la revendication 2, où le dispositif d'attribution d'adresse comprend un convertisseur de protocole (5) adapté pour convertir au moins une partie d'un protocole de bus de terrain en une représentation compatible IPv6, et inversement, la représentation IPv6 constituant une représentation texte ou binaire et le convertisseur de protocole présentant préférentiellement un composant de connexion (5a) adapté pour regrouper ou répartir des services d'appareils connectés au bus de terrain.

4. Dispositif selon l'une des revendications 1 à 3, où le dispositif de configuration (7) est adapté pour appeler des informations de gestion, ledit dispositif de configuration (7) pouvant être connecté à un serveur de services pouvant recevoir par ledit dispositif de configuration (7) des informations sur les appareils connectés au bus de terrain, sur lesquels le serveur de services dispose de droits d'accès en commande et/ou en lecture.

5. Dispositif selon l'une des revendications précédentes, comprenant au moins un adaptateur réseau compatible IPv4 pour connexion à un réseau IPv4, adapté pour accéder à au moins un appareil connecté au bus de terrain.

6. Système comprenant un routeur (20) pouvant être connecté à un serveur de services (30) et un dispositif passerelle selon l'une des revendications précédentes, où le routeur est connecté au dispositif passerelle ou le routeur comprend au moins une partie des dispositifs du dispositif passerelle, où le routeur comprend préférentiellement au un des dispositifs suivants, au moins un adaptateur réseau à bus de terrain (4), le dispositif d'attribution d'adresse (5) ou le convertisseur de protocole (5), le dispositif de filtre (6) facultativement avec une base de données (6a) avec un ensemble de règles pour des mécanismes de sécurité et une protection anti-accès et le dispositif de configuration (7).

7. Système selon la revendication 6, où le routeur (20) comprend un serveur DHCPv6 (21) et/ou un dispositif transmettant le préfixe IPv6 d'une adresse IPv6 nouvellement attribuée au routeur, au dispositif d'attribution d'adresse (5) ou au convertisseur de protocole (5), lequel assemble ou actualise à partir du préfixe IPv6 et d'un identifiant d'interface IPv6 une adresse IPv6 individuelle pour un appareil respectif connecté au bus de terrain.

8. Système comprenant un serveur de services et un dispositif passerelle selon l'une des revendications 1 à 5, pouvant être connecté à un système selon la revendication 6 ou la revendication 7, où le serveur de services (30) comprend au moins un adaptateur réseau physique (31) compatible IPv6, un dispositif de représentation (32) d'adresses IPv6 sur des appareils physiques de bus de terrain, un dispositif de fourniture de services (33) et un dispositif (34) de configuration et de gestion.

9. Procédé de connexion d'appareil de bus de terrain à Internet, préférentiellement au moyen d'un dispositif passerelle selon l'une des revendications 1 à 5 ou avec un système selon la revendication 6 ou 7, comprenant les étapes suivantes :
connexion d'au moins un adaptateur réseau (8) à un réseau IPv6,
connexion d'au moins un adaptateur réseau à bus de terrain (4) à un bus de terrain correspondant, configuration d'au moins un adaptateur réseau IPv6 virtuel (8a, 8b, 8c) avec une adresse IPv6 individuelle pour un appareil respectif connecté au bus de terrain au moyen d'un dispositif d'attribution d'adresse (5),
exécution de paramétrages de configuration au moyen d'un dispositif de configuration (7) sur au moins un des dispositifs suivants, le dispositif d'attribution d'adresse (5) ou le convertisseur de protocole (5), un dispositif de filtre (6) et un des adaptateurs réseau (8a, 8b, 8c), le dispositif de filtre (6) étant disposé entre l'adaptateur réseau (8) et le dispositif d'attribution d'adresse ou le convertisseur de protocole (5),
**caractérisé par** :
l'implémentation de mécanismes de sécurité au moyen du dispositif de filtre (6), lesdits mécanismes de sécurité étant une protection anti-accès et/ou des fonctions d'authentification et d'actualisation, le dispositif de filtre (6) comportant une base de données (6a) avec un ensemble de règles pour des mécanismes de sécurité et une protection anti-accès, et le dispositif de filtre (6) étant paramétrable par le dispositif de configuration (7) au moyen de la base de données (6a), et la visibilisation ou le masquage,
au moyen du dispositif de filtre (6) et en fonction des mécanismes de sécurité implémentés, d'un appareil connecté au bus de terrain pour un serveur de services dans le réseau IPv6, pour un accès en lecture et/ou un accès en commande illimitée audit appareil.

10. Procédé selon la revendication 9, comprenant les autres étapes suivantes :
attribution d'un identifiant d'interface IPv6, préférentiellement comme fraction locale d'une adresse IPv6 individuelle, univoque pour l'appareil connecté, au moyen du dispositif d'attribution d'adresse,
l'adresse IPv6 comprenant un préfixe IPv6 et la fraction locale de l'adresse IPv6, le préfixe IPv6 étant avantageusement modifié à intervalles temporels définis, préférentiellement chaque jour.

11. Procédé selon la revendication 9 ou la revendication 10, comprenant les autres étapes suivantes :
conversion d'au moins une partie d'un protocole de bus de terrain en une représentation compatible IPv6, et inversement, au moyen du dispositif d'attribution d'adresse comprenant un convertisseur de protocole (5), la représentation IPv6 constituant une représentation texte ou binaire, et le regroupement ou la répartition des services d'appareils connectés au bus de terrain au moyen du convertisseur de protocole présentant préférentiellement un composant de connexion (5a).

12. Procédé selon la revendication 9, comprenant les autres étapes suivantes :
appel d'informations de gestion au moyen du dispositif de configuration (7), ledit dispositif de configuration (7) pouvant être connecté à un serveur de services pouvant recevoir par ledit dispositif de configuration (7) des informations sur les appareils connectés au bus de terrain, sur lesquels le serveur de services dispose de droits d'accès en commande et/ou en lecture.
